# EUROPEAN PATENT APPLICATION

(11) **EP 4 674 919 A1**
(43) Date of publication of application: **07.01.2026**
(21) Application number: 25174961.0
(22) Date of filing: 08.05.2025
(51) Int. Cl.: C09J 7/20

(54) **ADHESIVE FILM AND METHOD FOR MANUFACTURING THE ADHESIVE FILM**

(30) Priority: 01.07.2024 US 202418760923
(71) Applicant: Lohmann GmbH & Co. KG, 56567 Neuwied (DE)
(72) Inventor: Lutz, Volker, 56579 Rengsdorf (DE); Weisenstein, Christian, 57548 Kirchen (DE); Schaefer, René, 53520 Müllenbach (DE)

(57) **Abstract**

The invention relates to an adhesive film comprising an electrically conductive adhesive layer, an electrically conductive coating, and a substrate, wherein the adhesive layer is arranged directly on the coating and the coating is arranged directly on the substrate, and wherein the coating comprises at least one cavity filled by the adhesive layer.

## Description

Electrically conductive adhesives are used in a multitude of fields of application, such as electronics and medicine. Due to the constantly increasing requirements which need to be fulfilled by these adhesives, there is a desire to optimize both the adhesive properties and the electrical conductivity of these adhesives. However, doing so is a challenge, since adding a higher amount of electrically conductive additives increases the electrical conductivity, but negatively influences both cost and adhesive properties. Therefore, efforts have been made to find cost effective alternative ways to increase the electrical conductivity without affecting the adhesive properties.

One of these methods is laminating the electrically conductive adhesive onto an electrically conductive substrate, the substrate having a higher conductivity than the adhesive and most commonly consisting of silver, carbon or conductive polymers. This way, an adhesive film can be achieved which can be easily applied onto a surface and which has a higher electrical conductivity compared to an adhesive film consisting of just the adhesive layer. These adhesive films are, for example, known from WO 2020/178217 A1, in which the adhesive films comprise an electrically conductive adhesive layer, a carbon layer and a substrate, wherein the adhesive layer is covered by a release liner.

The object of this invention is to provide an adhesive film with improved properties concerning manufacturing, adhesive properties and electrical conductivity. This object is achieved by the features of claims 1 and 10, while advantageous embodiments and improvements may be taken from the dependent claims.

In one embodiment of the invention, the adhesive film comprises an electrically conductive adhesive layer, an electrically conductive coating, and a substrate, wherein the adhesive layer is arranged directly on the coating and the coating is arranged directly on the substrate, and wherein the coating comprises at least one cavity filled by the adhesive layer.

In a further embodiment of the invention, the adhesive film is manufactured using a method, the method comprising the following steps:
application of the coating onto the substrate and forming of the cavity,
lamination of the adhesive layer onto the coating, wherein the adhesive layer is tacky,
allowing for it to be pressed into the cavity during the lamination process.

This way, the electrical conductivity of the adhesive film can be increased and at the same time, the required amount of coating material can be reduced. Advantageously, the adhesive filling the cavity increases a contact surface between the adhesive layer and the coating. Especially advantageously, coating of the same layer thickness can be manufactured while saving on costs.

Electrically conductive materials are to be understood as any materials having an electrical conductivity of at least 10⁶ S/m measured at a temperature of 25°C. Examples of electrically conductive materials include a large variety of metals, conductive polymers such as PEDOT:PSS as well as different types of carbon, such as graphite and graphene.

The adhesive layer, the coating and the substrate are layers. A layer is to be understood as a flat or curved object with a length and width which are both at least 5 times, preferably at least 10 times a thickness of the object. The adhesive layer, the coating and the substrate may have different sizes and partially extend past each other. Preferably, the adhesive layer, the coating and the substrate have the same size and are arranged in a sandwich structure. The adhesive layer, the coating and the substrate may have identical or different layer thicknesses. The substrate may comprise multiple layers and/or coatings, preferably, the substrate consists of a single layer.

The adhesive film may be one-sided adhesive film or a double-sided adhesive film. A one-sided adhesive film is to be understood as an adhesive film comprising only a single adhesive side configured to be applied onto a surface to be bonded. A double-sided adhesive film is to be understood as an adhesive film comprising two adhesive sides arranged opposite to each other, each of which is configured to be applied onto a surface to be bonded. In case of the adhesive film being a one-sided adhesive film, the substrate may comprise any type of carrier material known in the field of adhesive tape manufacturing, such as metals, plastics and cellulose. Preferably, the substrate consists of an electrically insulating material. Electrically insulating materials are to be understood as any material having a specific resistance of at least 10¹¹ Ωmm²/m measured at a temperature of 25°C.

In case of the adhesive film being a double-sided adhesive film, the adhesive film may comprise a second coating and a second adhesive layer arranged on a side of the substrate opposite to the adhesive layer and the coating. Preferably, the substrate comprises at least one electrically conductive material to provide an electrical contact between the coating and the second coating. For example, the substrate may be a metal foil, or comprise a metal coating. Preferably, the substrate is anisotropically electrically conductive. For example, the substrate may comprise at least one anisotropically electrically conductive adhesive. Alternatively, the substrate may comprise at least one electrically insulating material and a multitude of vias, each vias comprising at least one electrically conductive material.

The adhesive film may comprise any number of additional layers configured to provide additional functionality. For example, the adhesive film may comprise a foam layer, a woven layer, a non-woven layer, an electrical insulation layer, a thermal insulation layer and/or a thermally conductive layer. Preferably, the adhesive film comprises one or two release liners in a non-applied state, depending on if the adhesive film is a one-sided adhesive film or a double-sided adhesive film.

The adhesive film may be part of an electrode system and configured for both attaching and electrically contacting the electrode system. Preferably, the electrode system is configured to measure biosignals, such as for example EMS signals, bioimpedance signals, ECG signals and/or EEG signals. The electrode system preferably comprises at least one electrical connection configured to be connected to an external device. The external device may for example be a display unit configured to receive the signals from the electrode system and display them. Preferably, the substrate comprises at least one through-hole or via providing an electrical connection between the electrical connector and the coating. The electrical connector may be connected to the external device using any form lock or friction lock. For example, the electrical connector may comprise at least one snap element, clamp element, thread element, hook element and/or dovetail element. Preferably, the electrical connector can be connected to the external device by hand and without needing tools. Preferably, the electrical connector is a snap fastener. The electrical connector may comprise any electrically conductive materials. The electrically conductive materials may be part of a main body of the electrical connector or be part of a coating. The electrically conductive materials may be electrically conductive particles. The electrode system may additionally comprise at least one sensor unit configured to measure additional signals, such as for example optical signals, thermal signals or chemical signals.

The cavity is to be understood as an area of the coating with a reduced thickness compared to the layer thickness. The layer thickness is a constant value which defines the thickness of the coating outside of cavity. Within the cavity, the thickness of the coating may be reduced gradually, preferably towards a center of the cavity. Alternatively, the thickness of the coating may be constant within the cavity. **In** a planar view, the cavity may have a polygonal, an oval or an amorphous shape. **In** the following, any descriptions of a shape of the cavity refers to the planar view, even if not explicitly stated. The cavity may be elongated and form a groove. Alternatively, the cavity may be bulbous and form a crater. The cavity may surround a section of the coating and form a ring for example.

The adhesive layer may be isotropically electrically conductive or anisotropically electrically conductive. The adhesive layer being anisotropically electrically conductive is to be understood as the adhesive layer being electrically conductive perpendicular to its main side and electrically insulating parallel to its main side. The adhesive layer being electrically insulating parallel to its main side is to be understood as the adhesive layer being sufficiently electrically insulating to prevent a short circuit of electrical contacts which are placed next to each other on the main side. A minimal distance in which the electrical contacts are still insulated from each other is commonly referred to as a "pitch". Preferably, the adhesive layer comprises at least one additive comprising an electrically conductive material. The additive may be a multitude of electrically conductive particles. The electrically conductive particles may for example consist of a metal, a conductive polymer or carbon. Alternatively, the electrically conductive particles may comprise a metal coating and a main body consisting of a glass, a plastic or a ceramics. Alternatively, the adhesive layer may be devoid of any electrically conductive additive and comprise at least one conductive polymer. For example, the adhesive layer may comprise at least one PEDOT:PSS-based adhesive.

An adhesive is to be understood as a composition created by a polymerization of monomers into polymers and a cross-linking of these polymers to form a polymer network. Adhesives are configured to form covalent, adhesive bonds to surfaces. The adhesive layer may for example comprise an acrylate-based adhesive, an epoxide-based adhesive, a polyurethane-based adhesive, a rubber-based adhesive and/or a silicone-based adhesive.

The adhesive layer preferably comprises at least one cross-linker. A cross-linker is to be understood as a molecule with at least two functional groups configured to react with corresponding functional groups of the polymers and forming a link between the polymers. Cross-linkers may be homobifunctional or heterobifunctional. Homobifunctional cross-linkers comprises multiple identical functional groups, whereas heterobifunctional cross-linkers comprise different functional groups. The cross-linker may for example comprise functional groups based on amines, amides, thiols, hydroxyls, carboxylates, aldehydes, organic phosphates, maleinimides, NHS esters, sulfhydrils, acids, alcohols, isocyanates and halogenides. 'Based on' in this context is to be understood as the adhesive comprising at least one of any substance belonging to the listed group, including any possible derivates. The cross-linker may be an activated cross-linker and initiate the cross-linking reaction immediately upon being added to the polymers. Alternatively, the cross-linker may be a deactivated cross-linker, which commonly are available in form of granulates or powders, the granulates and powders melting at a predefined temperature and releasing the cross-linker.

The adhesive may for example be a pressure-sensitive adhesive. A pressure-sensitive adhesive is to be understood as an adhesive which is tacky at 25°C before and during an application. The adhesive being tacky is to be understood as it being able to form covalent adhesive bonds by pressure alone. The adhesive may be cross-linked before the application and permanently tacky. Alternatively, the adhesive may be not or only partially cross-linked before the application and configured to be fully cross-linked after the application, thereby losing its tackiness. Cross-linking of pressure-sensitive adhesives is dependent on the composition, but most commonly requires a certain amount of heat or radiation.

Alternatively, the adhesive may be a hotmelt adhesive. A hotmelt adhesive is to be understood as an adhesive which is not tacky at 25°C and melts at a predefined temperature, usually in the range of 30-150°C. In a molten state, the hotmelt adhesive is tacky. The adhesive may be cross-linked before an application and able to be melted and solidified any number of times. Alternatively, the adhesive may be not or only partially cross-linked before the application and configured to be fully cross-linked after the application, thereby losing its ability to melt. Cross-linking of hotmelt adhesives is dependent on the composition, but most commonly requires a certain amount of heat or radiation.

The adhesive layer may comprise any further substances or additives, such as for example antioxidants, fillers, foaming agents, polymerization agents, cross-linkers, catalysts, thickening agents and/or tackifying resins.

**In** a further embodiment of the invention, the coating comprises a multitude of cavities which are spaced apart equally. The cavities may be identical or different to each other in terms of a size and/or shape and/or depth profile. Preferably, the cavities are arranged in at least one pattern. The pattern may be a repeating pattern and, in a planar view, cover at least 50 %, preferably at least 75 % of the coating. For example, the pattern may be a comb pattern or a concentrical pattern. Alternatively, the coating may comprise multiple groups of cavities, the cavities of each group being spaced apart equally and arranged in a pattern, wherein the patterns are dispersed over the coating. The patterns may be identical or different to each other. **In** a first example, the cavities may be shaped like sections of a circle and arranged in a concentrical pattern, wherein a size of the individual cavities is proportional to their distance from the center. **In** a second example, the cavities may have a hexagonal shape and be arranged in a repeating pattern, which is a comb pattern. This way, regardless of a size of the adhesive film, a consistently high electrical conductivity can be achieved without increasing the complexity of the manufacturing process.

**In** a further embodiment of the invention, the cavities are arranged in a matrix pattern. The cavities being arranged in a matrix pattern is to be understood as the cavities being arranged in any number of rows, wherein each row comprises any equal number of cavities. The matrix pattern is a repeating pattern. Preferably, the matrix pattern can be scaled to occupy any rectangular space on the coating. Preferably, the cavities have rectangular shapes, especially preferably square shapes. This way, the coating of the adhesive film, which will have a rectangular shape in a lot of application fields, can be efficiently covered by the cavities.

**In** a further embodiment of the invention, the coating comprises a multitude of cavities with a random arrangement, depth profile and shape. Preferably, the random arrangement of cavities covers the entire coating. The cavities may have a maximum depth equal to the layer thickness of the coating. Preferably, the cavities have a maximum depth of at most 70 %, especially preferably at most 50 % of the layer thickness of the coating. The cavities may, for example, be created by forming an initial smooth layer of the coating and a roughening of the surface of said layer via an abrasive process. The abrasive process may include a jet of abrasive material or a grinder. This way, the cavities can be formed without the need for stamps, molds or programmable coating devices required to define a pattern, while still achieving an increase in electrical conductivity.

In a further embodiment of the invention, the cavity is an indentation. An indentation is to be understood as a cavity having a maximum depth lower than the layer thickness of the coating. Preferably, a maximum depth of the cavity is at most 70 %, especially preferably at most 50 % of the layer thickness of the coating. Preferably, the coating comprises a base layer, the base layer having a homogeneous thickness throughout. Preferably, the base layer is at least partially uncovered in the area of the cavity. For example, the coating could be formed by two sequential coating processes, wherein a first coating process forms the base layer and a second coating process forms a rest of the coating. Alternatively, the coating could be formed by a single coating process followed by a shaping process, such as for example a stamping process. In case of the coating comprising the base layer, the layer thickness of the coating is defined by the thickness of both the base layer and the rest of coating outside of the area of the cavity. This way, the cavity can be combined with a complete coverage of the substrate by the coating, providing the advantages of both.

In a further embodiment of the invention, the cavity is a gap in the coating and has a maximum depth equal to the layer thickness of the coating. Preferably, the adhesive layer directly contacts the substrate through the cavity. The cavity may be formed either in a single step by a discontinuous forming of the coating, or by a two-step process including a continuous forming of the coating followed by a removal step. This way, the maximum amount of coating material can be saved.

In a further embodiment of the invention, the coating comprises a multitude of ridges forming at least one pattern, the pattern consisting of a multitude of cavities bordered by the ridges. A ridge is to be understood as an elongated part of the coating which extends perpendicular towards the main side of the adhesive film. The ridges may be identical or different to each other in terms of a shape, length, width and thickness. The ridges may be straight or curved. The ridges may have a consistent or inconsistent width and/or thickness. Preferably, the ridges each comprise a peak section which may be a plateau or a peak, and two side sections, which may be vertical, angled or curved. The pattern may be a repeating pattern. Alternatively, the ridges may form a multitude of patterns. The patterns may be identical or different to each other. Preferably, all ridges within a single pattern are linked. The ridges being linked is to be understood as each of the ridges being connected to at least one of the other ridges at their end points. The ridges may be linked via crossings, in which multiple ridges cross each other. **In** case of the coating comprising the base layer, the ridges extend from the base layer. **In** case of the cavity being a gap, the ridges extend from the substrate. This way, instead of forming the cavities via removal or displacement of coating material, they can be formed by placing coating material around them, saving on manufacturing costs.

**In** a further embodiment of the invention, the adhesive layer comprises at least one adhesive which is tacky in at least a non-cured state. Preferably, the adhesive has a glass transition temperature of at most -10°C. For example, the adhesive may be a pressure-sensitive adhesive and either remain tacky or lose its tackiness in a cured state. This way, it is guaranteed that a viscosity of the adhesive is low enough to allow a complete filling of the cavity simply by applying enough pressure during the lamination process.

**In** a further embodiment of the invention, the adhesive layer comprises at least one adhesive, the adhesive comprising at least one thermoplastic polymer. The polymer being thermoplastic is to be understood as the polymer defining a melting point of the adhesive in the range of 30-150°C. Preferably, the adhesive is not tacky below its melting point and tacky in a molten state. Preferably, the adhesive is a hotmelt adhesive. Preferably, the adhesive comprises 0,1-20 wt%, especially preferably 8-15 wt% of a cross-linker. Preferably, the cross-linker is a heat-activatable cross-linker with an activation temperature at least 10°C higher than the melting point of the adhesive. The cross-linker may for example be a dibenzoyl peroxide, peroxodisulphate, bis(2-ethylhexyl) peroxydicarbonate or methylethyl ketoneperoxide. Preferably, the cross-linker comprises at least one poly-isocyanate and/or at least one polyhydric alcohol. Preferably, the adhesive comprises 40-98 wt%, especially preferably 50-70 wt% of the thermoplastic polymer. The thermoplastic polymer may for example be a polyamide, polyoxymethylene, polyethylene terephthalate, polybutylene terephthalate, polytetrafluorethylene, polypropylene (isotactic or syndiotactic), polyethylene or polyurethane. The thermoplastic polymer may be a crystalline polymer devoid of amorphous areas. Alternatively, the thermoplastic polymer may be a semi-crystalline polymer comprising crystalline areas and amorphous areas. This way, the adhesive layer can be made tacky 'on demand' by heating it, making storage easier while not increasing the complexity of the manufacturing process significantly. Advantageously, the temperature can be further increased after the lamination process in order to cure the adhesive and increase a strength of the bond between the adhesive layer and the coating.

**In** a further embodiment of the invention, the method for manufacturing of the adhesive film performs the application of the coating onto the substrate and the forming of the cavity via a discontinuous printing process. The printing process being discontinuous is to be understood as the printing process printing at least one layer of the coating discontinuously, leaving out parts to form the cavity. This method allows for the manufacturing of any of the described types of cavities in an easily interchangeable manner. Advantageously, the amount of coating material used can be minimized.

The following is a description of the figures. For the sake of visibility, in cases where multiple of the same element or unit are present in the same figure, only one of these elements or units is given a reference sign.

It is shown:
- Fig. 1: A schematic depiction of an adhesive film according to the invention in a cross-sectional view.
- Fig. 2: A schematic depiction of the adhesive film in a planar view from above.
- Fig. 3: A schematic depiction of a further embodiment of an adhesive film according to the invention in a planar view from above.
- Fig. 4: A schematic depiction of a further embodiment of an adhesive film according to the invention in a planar view from above.
- Fig. 5: A schematic depiction of a further embodiment of an adhesive film according to the invention in a cross-sectional view.
- Fig. 6: A schematic depiction of a further embodiment of an adhesive film according to the invention in a cross-sectional view.

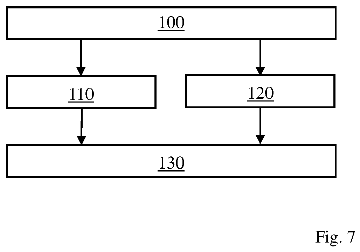

- Fig. 7: A schematic process chart of a method for manufacturing of the adhesive film according to the invention.

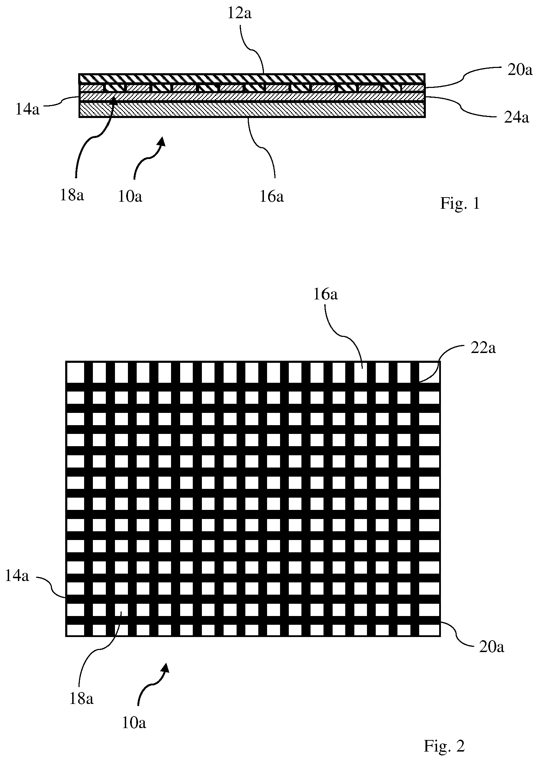

Figures 1 and 2 show an adhesive film 10a. The adhesive film 10a is a one-sided adhesive film. The adhesive film 10a is configured to bond and electrically contact electronic components. Alternatively, the adhesive film 10a may be part of an electrode system (not shown).

The adhesive film 10a comprises a substrate 16a. The substrate 16a is a layer. The substrate 16a is a metal foil. **In** case of the adhesive film 10a being part of an electrode system, the substrate 16a consist of an electrically insulating material such as polyurethane or other plastics and comprise through-holes or vias for connecting with an electrical connector (not shown).

The adhesive film 10a comprises an electrically conductive coating 14a. The coating 14a is arranged directly on the substrate 16a. The coating 14a consists of a silver/silver chloride ink. Alternatively, the coating 14a may consist of other inks or pastes comprising carbon and/or other metals.

The coating 14a comprises a base layer 24a. The base layer 24a is a continuous layer.

The coating 14a comprises a multitude of cavities 18a. The cavities 18a are indentations and have a maximum depth of 50 % of a layer thickness of the coating 14a. The cavities 18a are identical to each other. A thickness of the coating 14a is constant within areas of the cavities 18a. The maximum depth of the cavities 18a is equal to a difference between the layer thickness of the coating 14a and a thickness of the base layer 24a. The cavities 18a have a square shape. The cavities 18a are spaced apart equally. The cavities 18a are arranged in a matrix pattern.

The coating 14a comprises a multitude of ridges 20a. The ridges 20a extend from the base layer 24a perpendicular to a main side of the adhesive film 10a. The ridges 20a are connected via crossings 22a. The ridges 20a form a checked pattern. The checked pattern is a repeating pattern and extends over the entire coating 14a.

The adhesive film 10a comprises an electrically conductive adhesive layer 12a. The adhesive layer 12a is arranged directly on the coating 14a. The adhesive layer 12a fills the cavities 18a completely. The adhesive layer 12a comprises an adhesive which is tacky in a non-cured state. The adhesive comprises a thermoplastic polymer. The adhesive is a hotmelt adhesive. Alternatively, the adhesive may be a pressure-sensitive adhesive, such as an acrylate-based pressure-sensitive adhesive, a rubber-based pressure-sensitive adhesive or a silicone-based pressure-sensitive adhesive. The adhesive comprises a cross-linker. The cross-linker is a heat-activatable cross-linker. The adhesive has the following composition:

| Substance | Amount [wt%] |
|---|---|
| Film former | 1,4 |
| Crystalline polyurethane | 54,5 |
| Cross-linker (poly-isocyanate) | 11,5 |
| Electrically conductive particles | 32,6 |

The crystalline polyurethane has a melting point of 50°C. The cross-linker has an activation temperature of 100°C. The adhesive is in a non-cured state before an application of the adhesive film 10a. During the application, the adhesive layer 12a is melted to make it tacky. After the application, the adhesive film 10a is heated further in order to activate the cross-linker and fully cure the adhesive film 10a. In a cured state, the adhesive is no longer tacky and can no longer be melted.

The adhesive film 10a may comprise a release liner (not shown) covering the adhesive layer 12a before the application.

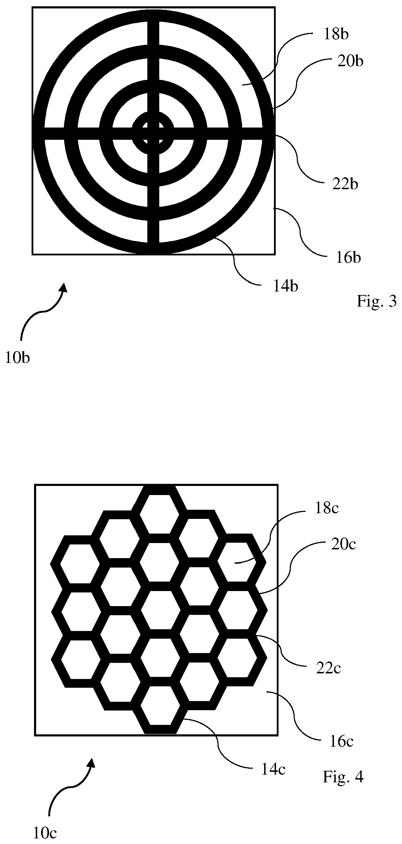

Figures 3 and 4 show further embodiments of an adhesive film 10b, 10c. These adhesive films 10b, 10c are identical to the adhesive film 10a of figures 1 and 2 except for the ridges 20b, 20c and cavities 18b, 18c. The cavities 18b of the adhesive film 10b of figure 3 are arranged in a concentrical pattern and shaped as sections of a circle. The cavities 18b have sizes proportional to their distance from a center. The cavities 18c of the adhesive film 10c of figure 4 have a hexagonal shape and are arranged in a comb pattern.

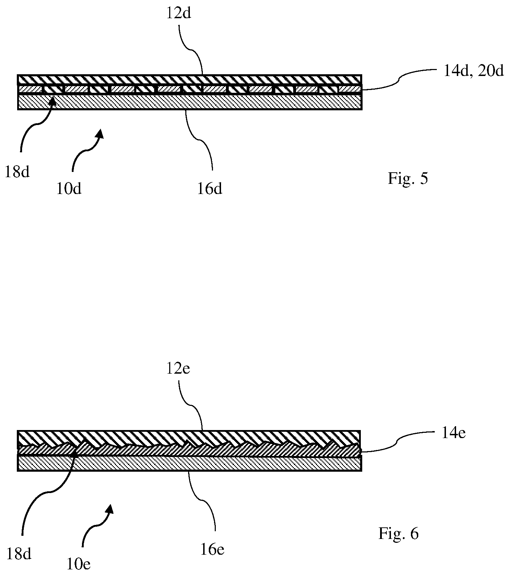

Figure 5 shows a further embodiment of an adhesive film 10d. In the following, only differences between the adhesive film 10d of figure 5 and the adhesive film 10a of fig-ures 1 and 2 will be mentioned.

The adhesive film 10d of figure 5 comprises a coating 14d. The coating 14d does not comprise a base layer. The coating 14d comprises a multitude of cavities 18d. The cavities 18d are gaps in the coating 14d. The cavities 18d have a consistent depth. The depth is equal to a layer thickness of the coating 14d.

Figure 6 shows a further embodiment of an adhesive film 10e. In the following, only differences between the adhesive film 10e of figure 6 and the adhesive film 10a of fig-ures 1 and 2 will be mentioned.

The adhesive film 10e of figure 6 comprises a coating 14e. The coating 14e comprises a multitude of cavities 18e with a random arrangement, depth profile and shape.

Figure 6 shows a schematic process chart of a method for manufacturing the adhesive films 10a-e.

The method comprises a discontinuous printing process. In a first printing step 100 of the discontinuous printing process, a first layer of the coating 14a-e is applied onto the substrate 16a-e. The first printing step 100 may be performed via screen printing or any other suitable printing methods. In case of the coating 14a-c comprising the base layer 24a-c, the first printing step 100 applies the base layer 24a-c. In case of the adhesive film 10d-e not having a base layer, the first printing step 100 applies the entire coating 14-e.

In a second printing step 110, which is only performed in cases where the coating 10a-c comprises the base layer 24a-c, a rest of the coating 14a-c is applied onto the base layer 24a-c. In case of the coating 14e comprising random cavities 18e, the second printing step 110 is replaced by a removal step 120 in which the cavities 18e are formed via an abrasion of a surface of the coating 14e.

In a lamination step 130, the adhesive layer 12a-e is laminated onto the coating 14a-e. In the lamination step 130, the adhesive layer 12a-e is pressed into the coating 14a-e in order to push the adhesive layer 12a-e into the cavities 18a-e. After the lamination step 130, the adhesive film 10a-e is finished and ready for application.

## Claims

1. Adhesive film comprising an electrically conductive adhesive layer, an electrically conductive coating, and a substrate, wherein the adhesive layer is arranged directly on the coating and the coating is arranged directly on the substrate, and wherein the coating comprises at least one cavity filled by the adhesive layer.

2. Adhesive film according to claim 1, wherein the coating comprises a multitude of cavities which are spaced apart equally.

3. Adhesive film according to claim 2, wherein the cavities are arranged in a matrix pattern.

4. Adhesive film according to claim 1, wherein the coating comprises a multitude of cavities with a random arrangement, depth profile and shape.

5. Adhesive film according to any of the preceding claims, wherein the cavity is an indentation.

6. Adhesive film according to any of the claims 1 to 4, wherein the cavity is a gap in the coating and has a maximum depth equal to a layer thickness of the coating.

7. Adhesive film according to any of the preceding claims, wherein the coating comprises a multitude of ridges forming at least one pattern, the pattern consisting of a multitude of cavities bordered by the ridges.

8. Adhesive film according to any of the preceding claims, wherein the adhesive layer comprises at least one adhesive which is tacky in at least a non-cured state.

9. Adhesive film according to any of the preceding claims, wherein the adhesive layer comprises at least one adhesive, the adhesive comprising at least one thermoplastic polymer.

10. Method for manufacturing of the adhesive film according to claim **1,** comprising the following steps:
application of the coating onto the substrate and forming of the cavity,
lamination of the adhesive layer onto the coating, wherein the adhesive layer is tacky, allowing for it to be pressed into the cavity during the lamination process.

11. Method according to claim 10, wherein the application of the coating onto the substrate and the forming of the cavity is performed via a discontinuous printing process.
